# EUROPEAN PATENT SPECIFICATION

(11) **EP 0 866 840 B1**
(45) Date of publication and mention of the grant of the patent: **20.10.1999**
(21) Application number: 96925174.3
(22) Date of filing: 26.07.1996
(51) Int. Cl.: C09J 121/02, B65D 75/36

(54) **AN AQUEOUS ADHESIVE WHICH CAN BE APPLIED TO A SUBSTRATE BY SCREEN PRINTING, A METHOD FOR PREPARING SAME AND THE USE OF SUCH AN ADHESIVE**
WÄSSRIGE KLEBEZUSAMMENSETZUNG, WELCHE DURCH SIEBDRUCK AUF EINEM SUBSTRAT VERWENDBAR IST, VERFAHREN ZU IHRER HERSTELLUNG UND IHRE VERWENDUNG
ADHESIF AQUEUX APPLICABLE SUR UN SUBSTRAT PAR SERIGRAPHIE, PROCEDE DE PREPARATION ET UTILISATION D'UN TEL ADHESIF

(30) Priority: 28.07.1995 NL 1000897
(43) Date of publication of application: 30.09.1998
(73) Proprietor: Ligra B.V., 6051 KN Maasbracht (NL)
(72) Inventor: LINSSEN, Ronaldus, Josephus, Marie, NL-6067 HG Linne (NL); WOUTERS, Gerardus, Wilhelmus, NL-1645 RC Ursem (NL)
(74) Representative: Fieret, Johannes, Ir.
(86) International application number: NL9600303
(87) International publication number: WO9705208

(56) References cited:
- EP-A- 0 642 988
- DATABASE WPI Section Ch, Week 8347 Derwent Publications Ltd., London, GB; Class A81, AN 83-823352 XP002019297 & JP,A,58 174 484 (KAO CORP) , 13 October 1983
- DATABASE WPI Section Ch, Week 8247 Derwent Publications Ltd., London, GB; Class A81, AN 82-01817J XP002019298 & SU,A,899 614 (CHEM IND RES DES IN) , 23 January 1982
- DATABASE WPI Section Ch, Week 8514 Derwent Publications Ltd., London, GB; Class A81, AN 85-083300 XP002019299 & JP,A,60 032 869 (TOA GOSEI CHEM IND LTD) , 20 February 1985

## Description

The present invention relates to a method to apply an aqueous adhesive on a substrate, an aqueous adhesive to be used in such a method, and furthermore to the use of such an aqueous adhesive on a substrate, in particular a blister pack.

An aqueous adhesive of this type is known from Japanese Patent Application 62 048 780 (Toa Gosei). This Japanese patent application relates to water-dispersable, pressure-sensitive adhesive compositions which can be used for being applied to substrates, such as films, textiles and paper by screen printing. Adhesive compositions of this type are obtained by polymerizing in an aqueous medium a monomer mixture consisting of (meth)acrylic acid esters. Polymerization in an aqueous medium requires the use of emulsifiers or dispersing agents. The polymers formed have a relatively high molecular weight and are dispersable, but they are not water-soluble any more, as a result of which it is difficult to obtain a uniform distribution over the substrate. In addition to that the use of an adhesive composition comprising polymers having a high molecular weight in practice often leads to clogging of the screen to be used in screen printing. Due to the fact that partial polymerization of the adhesive already takes place on the screen, a skin is formed, as a result of which the mesh of the screen wire becomes clogged, which leads to incomplete application of the aqueous adhesive to the substrate. In addition to that the aqueous adhesive according to said Japanese patent application produces a strongly and permanently tacky surface after being applied to a substrate, which is undesirable in practice.

Database WPI section Ch, week 8247, Derwent Publications, AN 82-01817J describes adhesive synthetic rubber compositions containing butadiene-styrene rubber latex, urea, sodium carboxymethylcellulose, ethyleneglycol, surfactant and water. These compositions are especially adapted for bonding heavy articles like PVC-tiles on a heavy substrate like concrete. Although some of the components correspond to the components as disclosed in the present adhesive this publication does not disclose or suggest the application of the adhesive to a substrate by screen printing e.g. to form the blister pack according to the present invention which can be applied to a substrate by screen printing and which does not present any problems when the adhesive is squeezed through the screen, such as clogging of the screen and the formation of surface faults of the adhesive on the substrate. In addition to that the aqueous adhesive must exhibit an adequate adhesive power and be capable of being applied to a substrate by screen printing at great speed, which makes demands of the viscosity and solid matter content of the adhesive.

The method to apply an aqueous adhesive on a substrate as referred to in the introduction is according to the present invention characterized in that said adhesive comprising:
(A) 40 - 60 % by weight of a rubber,
(B) 0,2 - 8 % by weight of a water-soluble cellulose derivative, and
(C) 4 - 20 % by weight of a water-miscible co-solvent, wherein all percentages are based on the total weight of said adhesive and the pH-value of the resulting aqueous adhesive being from 8,5 to 12, is applied on said substrate by screen printing.

After the aqueous adhesive according to the present invention has been applied to a substrate and subsequently been dried by using drying in the air, a drying tunnel or another drying treatment as will be apparent to those skilled in the art, the surface of the dried aqueous adhesive will be substantially non-tacky. A bond is obtained by pressing two substrates provided with films of a dried aqueous adhesive together under the application of a force, for example by means of mechanical pressure rollers or a vacuum.

The amount of rubber (A) in the aqueous adhesive according to the present invention is 40-60% by weight, based on the total weight of the aqueous adhesive. When the amount of rubber (A) is more than 60% by weight, the viscosity of the resulting adhesive will decrease undesirably, as a result of which the aqueous adhesive will present problems when being processed by screen printing. When the amount of rubber is less than 40% by weight, the resulting aqueous adhesive will contain insufficient active material, in particular rubber substances, as a result of which the desired adhesive power will be insufficient. Such a low rubber content will furthermore lead to absorption of the adhesive into the substrate, as a result of which the contact percentage between the substrate layers to be bonded will be too low. In addition to that it has become apparent that surface faults, such as blistering, will occur in the adhesive film applied to the substrate, which surface faults have an adverse effect on the adhesive power and on the outward appearance.

The amount of water-soluble cellulose derivative (B) in the aqueous adhesive according to the present invention is 0.2-8% by weight, based on the total weight of the aqueous adhesive. When the amount of water-soluble cellulose derivative (B) is more than 8% by weight, the amount of solid matter in the resulting aqueous adhesive will be too high, so that screen printing of the aqueous adhesive is no longer possible, in particular because of the strongly increased viscosity of the adhesive. Such a high percentage of water-soluble cellulose derivative (B) will moreover lead to a reduced adhesive power of the resulting aqueous adhesive. When the amount of water-soluble cellulose derivative (B) is less than 0.2% by weight, the viscosity of the eventual aqueous adhesive will be too low, as a result of which the adhesive cannot be satisfactorily distributed over the screen with the scraping means, for example a doctorblade or a squeegee. In addition to that the presence of a cellulose derivative prevents the aqueous adhesive from drying on the screen already, whilst it is furthermore prevented that film formation takes place too quickly.

The amount of water-miscible co-solvent (C) in the aqueous adhesive according to the present invention is 4-20% by weight, based on the total weight of the aqueous adhesive. When the amount of water-miscible co-solvent (C) is more than 20% by weight, the viscosity of the resulting aqueous adhesive will be too high, as a result of which screen printing of the aqueous adhesive is no longer possible. In addition to that flocculation may occur. When the amount of water-miscible co-solvent (C) is less than 4% by weight, drying of the adhesive will become problematic.

It is preferred to use natural rubber as the rubber component (A). It is also possible, however, to use a mixture of natural rubber and synthetic rubber as the rubber component (A) in the aqueous adhesive according to the present invention, but the natural rubber content of such a mixture must be at least 70%. When the amount of natural rubber is less than 70%, the adhesive power of the resulting aqueous adhesive will be insufficient. It is preferred to use an aqueous natural rubber dispersion in the aqueous adhesive according to the present invention, in particular a aqueous natural rubber dispersion with a low ammonia content. A low ammonia content is preferred because the emission of ammonia into the atmosphere will be low when such a rubber dispersion is used, as a result of which there will be no problems in connection with the legal provisions with regard to the maximum allowable ammonia content in closed rooms when the adhesive according to the present invention is processed by screen printing.

According to the present invention it is preferred to use methyl hydroxy ethyl cellulose as the cellulose derivative (B). Methyl hydroxy ethyl cellulose is a molecule surrounded by a water jacket, which prevents the dispersion of the aqueous adhesive from drying on the screen already, because such a cellulose derivative "retains" the water. In addition to that methyl hydroxy ethyl cellulose exhibits strong swelling by nature and prevents the rubber present in the adhesive from forming a film too quickly. Methyl hydroxy ethyl cellulose is marketed by Hoechst, Frankfurt am Main, Germany, under the brand name Tylose MH (brand). In another embodiment of the present invention carboxymethyl cellulose is used as the cellulose derivative (B).

According to the present invention it is preferred to use an organic compound having at least one OH-functionality as the water-miscible co-solvent (C). An organic compound of this type is miscible with water, keeps the rubber in dispersion and in addition must not have an adverse effect on the rubber, such as swelling. It is preferred to use an organic compound which forms an azeotrope with the aqueous adhesive. The advantage of this is that the co-solvent evaporates from the adhesive simultaneously with the water present in said adhesive, thus ensuring the stability of the adhesive on the screen. In addition to that the formation of an azeotrope will lead to an even evaporation speed. It is preferred to use a polyvalent alcohol, in particular hexylene glycol, in the aqueous adhesive according to the present invention. In addition to that it is also possible to use other organic compounds which form an azeotrope with the aqueous adhesive, such as compounds having at least one OH-functionality and one or more functional groups selected from ketone and aldehyde groups.

The aqueous adhesive according to the present invention preferably comprises an agent for regulating the pH-value, in particular preferably comprises an agent for regulating the pH-value, in particular AMP 90 (marketed by BASF of Germany). The pH-value of the resulting aqueous adhesive must vary between 8.5 - 12. With a pH-value outside this range flocculation will occur. The addition of such an agent moreover has a buffering effect on the aqueous adhesive.

The aqueous adhesive according to the present invention may furthermore comprise agents selected from the group consisting of antistatic agents, anti-oxidants, flow control agents, pigments.

The method for preparing the aqueous adhesive according to the present invention is carried out by mixing an aqueous solution containing a cellulose derivative with a solution containing a co-solvent, after which the rubber component is added to the solution thus obtained. It is to be preferred to add the rubber component to the solution of the cellulose derivative and the co-solvent, because an aqueous adhesive forming a homogeneous solution is thus obtained. When first the rubber component is added to the aqueous solution containing a cellulose derivative, after which a solution containing a co-solvent is mixed therewith, the rubber component will adhere to the cellulose derivative, as a result of which the resulting aqueous adhesive will have an unsatisfactory homogeneity. Moreover, it is to be preferred to add the agent for regulating the pH-value to the solution 'containing the co-solvent.

The present invention furthermore relates to a substrate coated with an aqueous adhesive by screen printing, in particular a blister pack, whereby the aqueous adhesive according to the present invention has been applied thereon by screen printing.

A blister pack provided with an adhesive applied by screen printing is known from European Patent Application 0 642 988. According to said European patent application an adhesive is applied to the blister pack by screen printing, but there is no data available on the composition of the adhesive. Moreover, the adhesive according to European Patent Application 0 642 988 is an adhesive which provides a bond by using a high temperature and a high pressure, whilst the aqueous adhesive according to the present invention provides a bond by pressing together two substrates provided with dried films of aqueous adhesive.

The present invention will be explained in more detail hereafter by means of an example.

### Preparation of the aqueous adhesive according to the present invention.

An aqueous solution containing a cellulose derivative is prepared by adding 2 kg of Tylose MH (brand) to 30 kg of water under continuous stirring at a speed of 1500 revolutions per minute. After the full amount of Tylose MH (brand) has been added, the resulting solution is stirred for another 15 minutes, using a speed of 1750 revolutions per minute, after which a homogeneous solution is obtained. The temperature during mixing is lower than 35 °C. Then 6 kg of AMP 90 is dissolved in 14 kg of hexylene glycol in a separate vessel under continuous stirring, using 1500 revolutions per minute. The processing temperature is lower than 30 °C and a homogeneous solution is obtained. Then the solution containing hexylene glycol is mixed with the solution containing Tylose MH (brand) under continuous stirring at a speed of 1000 revolutions per minute for 10 minutes. The processing temperature is lower than 30 °C. Finally 50 kg of natural rubber are added. After stirring at a speed of 1500 revolutions per minute for about 10 minutes the aqueous adhesive according to the present invention is obtained as a homogeneous solution.

The homogeneous solution thus prepared is then applied to a blister pack by screen printing.

## Claims

1. A method to apply an aqueous adhesive on a substrate, characterized in that said adhesive comprising:
(A) 40 - 60 % by weight of a rubber,
(B) 0,2 - 8 % by weight of a water-miscible cellulose derivative, and
(C) 4 - 20 % by weight of a water-miscible co-solvent, wherein all percentages are based on the total weight of said adhesive and the pH-value of the resulting aqueous adhesive being from 8,5 to 12, is applied on said substrate by screen printing.

2. A method according to claim 1, characterized in that the rubber component (A) used is natural rubber.

3. A method according to claim 2, characterized in that the rubber component (A) used is a mixture of natural rubber and synthetic rubber, whereby the natural rubber content of the mixture is at least 70%.

4. A method according to claims 1 - 3, characterized in that an aqueous natural rubber dispersion is used.

5. A method according to claim 4, characterized in that an aqueous natural rubber dispersion having a low ammonia content is used.

6. A method according to claim 1, characterized in that the water-soluble cellulose derivative (B) used is methyl hydroxy ethyl cellulose.

7. A method according to claim 1, characterized in that the water-soluble cellulose derivative (B) used is carboxymethyl cellulose.

8. A method according to claim 1, characterized in that the water-miscible co-solvent (C) used is an organic compound having at least one OH-functionality.

9. A method according to claim 8, characterized in that the water-miscible co-solvent (C) used is a compound which forms an azeotrope with the aqueous adhesive.

10. A method according to claims 8 - 9, characterized in that a polyvalent alcohol is used.

11. A method according to claims 8 - 9, characterized in that the water-miscible co-solvent (C) used is an organic compound having at least one OH-functionality and one or more functional groups selected from ketone and aldehyde groups.

12. A method according to claim 10, characterized in that hexylene glycol is used.

13. A method according to claims 1 - 12, characterized in that said aqueous adhesive furthermore comprises an agent for regulating the pH-value.

14. A method according to claim 13, characterized in that AMP 90 is used.

15. A method according to claim 1 - 14, characterized in that said aqueous adhesive furthermore comprises agents selected from the group consisting of antistatic agents, anti-oxidants, flow control agents, pigments.

16. An aqueous adhesive to be applied on a substrate by screen printing, characterized in that, said adhesive comprises:
(A) 40 - 60 % by weight of a rubber mixture of 70 - 100% natural rubber and 0 - 30% synthetic rubber,
(B) 0,2 - 8 % by weight of a water-miscible-cellulose derivative, and
(C) 4 - 20 % by weight of a water-miscible co-solvent, wherein all percentages are based on the total weight of said adhesive and the pH-value of the resulting aqueous adhesive being from 8,5 to 12.

17. An aqueous adhesive according to claim 16, characterized in that, the rubber component (A) used is natural rubber.

18. An aqueous adhesive as defined in any of claims 4 - 15 to be applied on a substrate by screen printing.

19. A blister pack comprising a substrate, characterized in that said substrate has been obtained according to a method disclosed in claims 1 - 15.

## Patentansprüche

1. Verfahren zum Auftrag von wässrigem Klebstoff auf ein Substrat, dadurch gekennzeichnet, daß der Klebstoff, der:
(A) 40 - 60 Gewichtsprozent eines Kautschuks,
(B) 0,2 - 8 Gewichtsprozent eines mit Wasser vermischbaren Zellstoffderivats, und
(C) 4 - 20 Gewichtsprozent eines mit Wasser vermischbaren Verschnittmittels, wobei alle Prozentsätze auf dem Gesamtgewicht des Klebstoffs beruhen und der pH-Wert des sich ergebenden wässrigen Klebstoffs zwischen 8,5 und 12 liegt, umfaßt, durch Siebdruck auf das Substrat aufgetragen wird.

2. Verfahren nach Anspruch 1, dadurch gekennzeichnet, daß es sich bei der verwendeten Kautschukkomponente (A) um Naturkautschuk handelt.

3. Verfahren nach Anspruch 2, dadurch gekennzeichnet, daß es sich bei der verwendeten Kautschukkomponente (A) um eine Mischung aus Naturkautschuk und synthetischem Kautschuk handelt, wobei der Gehalt an Naturkautschuk in der Mischung mindestens 70 % beträgt.

4. Verfahren nach den Ansprüchen 1 - 3, dadurch gekennzeichnet, daß eine wässrige Naturkautschukdispersion verwendet wird.

5. Verfahren nach Anspruch 4, dadurch gekennzeichnet, daß eine wässrige Naturkautschukdispersion mit einem niedrigen Ammoniakgehalt verwendet wird.

6. Verfahren nach Anspruch 1, dadurch gekennzeichnet, daß es sich bei dem verwendeten wasserlöslichen Zellstoffderivat (B) um Methylhydroxyethylzellstoff handelt.

7. Verfahren nach Anspruch 1, dadurch gekennzeichnet, daß es sich bei dem verwendeten wasserlöslichen Zellstoffderivat (B) um Carboxymethylzellstoff handelt.

8. Verfahren nach Anspruch 1, dadurch gekennzeichnet, daß es sich bei dem verwendeten, mit Wasser vermischbaren Verschnittmittel (C) um eine organische Verbindung handelt, die mindestens eine OH-Funktionalität besitzt.

9. Verfahren nach Anspruch 8 , dadurch gekennzeichnet, daß es sich bei dem verwendeten, mit Wasser vermischbaren Verschnittmittel (C) um eine Verbindung handelt, die mit dem wässrigen Klebstoff ein Azeotrop bildet.

10. Verfahren nach den Ansprüchen 8 - 9, dadurch gekennzeichnet, daß ein polyvalenter Alkohol verwendet wird.

11. Verfahren nach den Ansprüchen 8 - 9, dadurch gekennzeichnet, daß es sich bei dem verwendeten, mit Wasser vermischbaren Verschnittmittel (C) um eine organische Verbindung mit mindestens einer OH-Funktionalität und einer oder mehreren funktionellen Gruppen, ausgewählt aus Keton- und Aldehydgruppen, handelt.

12. Verfahren nach Anspruch 10, dadurch gekennzeichnet, daß Hexylenglykol verwendet wird.

13. Verfahren nach den Ansprüchen 1 - 12, dadurch gekennzeichnet, daß der wässrige Klebstoff weiter ein Mittel zur Regulierung des pH-Wertes umfaßt.

14. Verfahren nach Anspruch 13, dadurch gekennzeichnet, daß AMP 90 verwendet wird.

15. Verfahren nach den Ansprüchen 1 - 14, dadurch gekennzeichnet, daß der wässrige Klebstoff weiter Mittel enthält, die aus der Gruppe bestehend aus antistatischen Mitteln, Antioxidantien, Verlaufmitteln, Pigmenten ausgewählt werden.

16. Wässriger Klebstoff der durch Siebdruck auf ein Substrat aufgetragen wird, dadurch gekennzeichnet, daß der Klebstoff umfaßt:
(A) 40 - 60 Gewichtsprozent einer Kautschukmischung mit 70 - 100 % Naturkautschuk und 0 - 30 % synthetischem Kautschuk,
(B) 0,2 - 8 Gewichtsprozent eines mit Wasser vermischbaren Zellstoffderivats, und
(C) 4 - 20 Gewichtsprozent eines mit Wasser vermischbaren Verschnittmittels, wobei alle Prozentsätze auf dem Gesamtgewicht des Klebstoffs basieren und der pH-Wert des sich daraus ergebenden wässrigen Klebstoffs zwischen 8,5 und 12 liegt.

17. Wässriger Klebstoff nach Anspruch 16, dadurch gekennzeichnet, daß es sich bei der Kautschukkomponente (A) um Naturkautschuk handelt.

18. Wässriger Klebstoff nach einem der Ansprüche 4 - 15, der durch Siebdruck auf ein Substrat aufgetragen wird.

19. Blisterpackung, umfassend ein Substrat, dadurch gekennzeichnet, daß das Substrat nach einem Verfahren erstellt wurde, das in den Ansprüchen 1 - 15 offenbart wird.

## Revendications

1. Procédé pour appliquer un adhésif aqueux sur un substrat, caractérisé en ce que ledit adhésif comprend :
(A) 40 à 60% en poids de caoutchouc,
(B) 0,2 à 8% en poids d'un dérivé de cellulose miscible dans l'eau, et
(C) 4 à 20 % en poids d'un co-solvant miscible dans l'eau, tous les pourcentages se basant sur la masse totale dudit adhésif et le pH de l'adhésif aqueux obtenu étant compris entre 8,5 et 12, qui est appliqué audit substrat par sérigraphie.

2. Procédé selon la revendication 1, caractérisé en ce que le composant caoutchouc (A) utilisé est un caoutchouc naturel.

3. Procédé selon la revendication 2, caractérisé en ce que le composant caoutchouc (A) utilisé est un mélange de caoutchouc naturel et de caoutchouc synthétique, la teneur en caoutchouc naturel s'élevant au moins à 70%.

4. Procédé selon l'une quelconque des revendications 1 à 3, caractérisé en ce qu'une dispersion aqueuse de caoutchouc naturel est utilisée.

5. Procédé selon la revendication 4, caractérisé en ce que l'on utilise une dispersion aqueuse de caoutchouc naturel présentant une faible teneur en ammoniaque.

6. Procédé selon la revendication 1, caractérisé en ce qu'un dérivé de cellulose soluble dans l'eau (B) utilisé est de la méthylhydroxyéthylcellulose.

7. Procédé selon la revendication 1, caractérisé en ce que le dérivé de cellulose soluble dans l'eau (B) utilisé est de la carboxyméthylcellulose.

8. Procédé selon la revendication 1, caractérisé en ce que le co-solvant miscible dans l'eau (C) utilisé est un composé organique présentant au moins un groupement OH.

9. Procédé selon la revendication 8, caractérisé en ce que le co-solvant miscible dans l'eau (C) utilisé est un composé qui forme un azéotrope avec l'adhésif aqueux.

10. Procédé selon les revendications 8 et 9, caractérisé en ce que l'on utilise un alcool polyvalent.

11. Procédé selon les revendications 8 et 9, caractérisé en ce que le co-solvant miscible dans l'eau (C) utilisé est un composé organique présentant au moins un groupement OH et un ou plusieurs groupes fonctionnels choisis parmi les groupes cétone et aldéhyde.

12. Procédé selon la revendication 10, caractérisé en ce que l'on utilise de l'héxylèneglycol.

13. Procédé selon l'une quelconque des revendications 1 à 12, caractérisé en ce ledit adhésif aqueux comprend en outre un agent destiné à réguler le pH.

14. Procédé selon la revendication 13, caractérisé en ce que l'on utilise de l'AMP 90.

15. Procédé selon l'une quelconque des revendications 1 à 14, caractérisé en ce que ledit adhésif aqueux comprend en outre des agents choisis dans le groupe comprenant les agents antistatiques, les antioxydants, les régulateurs de fluidité et les pigments.

16. Adhésif aqueux destiné à être appliqué sur un substrat par sérigraphie, caractérisé en ce que ledit adhésif comprend :
(A) 40 à 60% en poids d'un mélange de caoutchouc composé de 70 à 100% de caoutchouc naturel et de 0 à 30% de caoutchouc synthétique,
(B) 0,2 à 8% en poids d'un dérivé de cellulose miscible dans l'eau, et
(C) 4 à 20% en poids d'un co-solvant miscible dans l'eau, tous les pourcentages se basant sur la masse totale dudit adhésif et le pH de l'adhésif aqueux obtenu étant compris entre 8,5 et 12.

17. Adhésif aqueux selon la revendication 16, caractérisé en ce que le composant caoutchouc (A) utilisé est du caoutchouc naturel.

18. Adhésif aqueux selon l'une quelconque des revendications 4 à 15, destiné à être appliqué sur un substrat par sérigraphie.

19. Emballage blister comprenant un substrat, caractérisé en ce que ledit substrat est obtenu selon un procédé présenté dans les revendications 1 à 15.
